(19) Europäisches Patentamt
European Patent Office
Office européen des brevets

(11) **EP 2 292 317 B1**

(12) **EUROPÄISCHE PATENTSCHRIFT**

(45) Veröffentlichungstag und Bekanntmachung des Hinweises auf die Patenterteilung:
**13.04.2016 Patentblatt 2016/15**

(51) Int Cl.:
*B01D 61/36* (2006.01)      *B01D 69/10* (2006.01)
*B01D 61/02* (2006.01)

(21) Anmeldenummer: **09011304.4**

(22) Anmeldetag: **03.09.2009**

(54) **Kompositmembran**

Composite membrane

Membrane composite

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**09.03.2011 Patentblatt 2011/10**

(73) Patentinhaber: **Fraunhofer Gesellschaft zur Förderung der angewandten Forschung e.V.
80686 München (DE)**

(72) Erfinder:
• **Fritsch, Detlev
21465 Reinbeck (DE)**

• **Merten, Petra
21481 Lauenburg (DE)**

(74) Vertreter: **Pfenning, Meinig & Partner mbB Patent- und Rechtsanwälte
Theresienhöhe 11a
80339 München (DE)**

(56) Entgegenhaltungen:
**EP-A2- 0 753 337      US-A- 5 702 503
US-A1- 2006 246 273    US-A1- 2006 249 018
US-B1- 6 316 684**

EP 2 292 317 B1

**Beschreibung**

Die Erfindung betrifft eine Kompositmembran zur Trennung von Stoffgemischen nach der Methode der Nanofiltration oder der Dampfpermeation, umfassend wenigstens eine Trägerschicht und wenigstens eine auf der Trägerschicht ausgebildete stoffselektive Trennschicht. Ferner betrifft die Erfindung eine Verwendung einer Kompositmembran.

Es ist bekannt, dass bei der druckbetriebenen Nanofiltration Teilchen oder gelöste Moleküle kleiner 2 nm aus einer Lösung oder Suspension abgetrennt werden. Membranen, die für die Umkehrosmose entwickelt wurden und auch in diesem Trennbereich eine ausreichende Trennleistung erreichen und in technischem Maßstab zur Verfügung stehen, können hierfür nicht eingesetzt werden, da diese Membranen nicht über eine hinreichende Stabilität in organischen Lösemitteln verfügen.

Bei chemischen Reaktionen entstehen in der Regel Stoffgemische, die durch eine nachfolgende Trennung aufgereinigt bzw. in den reinen Stoff überführt werden. Diese Stoffgemische fallen häufig in organischen Lösemitteln an. Besonders bei thermisch empfindlichen Reaktionsprodukten bietet die druckbetriebene Nanofiltration eine energetisch extrem günstige und zudem schonende Methode zur Stofftrennung, da bei prinzipiell jeder vom Prozess bestimmten Temperatur gearbeitet werden kann und kein energiekostender Phasenwechsel flüssig-gasförmig-flüssig wie bei der Destillation erforderlich ist. Häufig hat der abzutrennende Stoff eine niedrige Molmasse kleiner 1.000 bis ca. 500 g/mol gegenüber der Molmasse des Lösemittels von ca. 50 bis 100 g/mol.

Die Stofftrennung in diesem Molmassenbereich aus organischen Lösemitteln wird auch als organophile Nanofiltration bezeichnet oder als organic solvent nanofiltration (OSN). Eine typische, technisch wichtige Anwendung ist die Abtrennung der Reaktionsprodukte vom Katalysator in der Homogenkatalyse. Weitere, wichtige Anwendungen der Nanofiltration aus organischen Lösemitteln sind in der Petrochemie und bei Synthesen in der Herstellung von Feinchemikalien zu finden.

Für die Umkehrosmose zur Abtrennung von Salzen aus Meerwasser oder Brackwasser wurden Membranen auf Basis von Cellulose oder Polyamid entwickelt. Diese Membranen werden aber von organischen Lösemitteln physikalisch angegriffen und zerstört, sind also hierfür nicht einsetzbar.

Die Nanofiltration, zu der die Umkehrosmose zählt, ist in der Literatur eingehend beschrieben (Nanofiltration: Principles and Applications, A.I. Schäfer, A.G. Fane, T.D. Waite (Eds.), Elsevier, Oxford (UK) 2005), wobei im Kapitel 21 mit dem Titel "Non-aqueous applications of NF" die im organischen Lösemittel ablaufende Nanofiltration beschrieben wird.

Lösemittelstabile Nanofiltrationsmembranen auf Basis von Polymeren wurden als integral asymmetrische und auch als Kompositmembranen entwickelt.

Sowohl in WO 94/125146 A1 als auch in WO 00/06293 A1 sind poröse, integral asymmetrische Polyimidmembranen zur Trennung von Lösungsmittel und Schmieröl offenbart. Die Polymermembranen, auch unter dem Markennamen STARMEM® bekannt, sind dabei lösemittelstabil.

Außerdem ist in WO 2007/125367 A1 eine asymmetrische Membran zur Nanofiltration von in organischen Lösemitteln gelösten Stoffen beschrieben. Die Rückhaltung dieser Nanofiltrationsmembranen ist abhängig vom jeweiligen Lösemittel, da die Poren der Membran je nach Lösemittel unterschiedlich stark quellen und dementsprechend sich die Rückhaltung und der Fluss mit dem Lösemittel ändern. Die Membranporen müssen dabei durch ein Konservierungsmittel vor dem Kollabieren geschützt werden. Das Konservierungsmittel muss vor der Anwendung aus den Poren vollständig entfernt werden, um das zu trennende Gemisch nicht zu verunreinigen. Bei einem unbeabsichtigten Austrocknen der Membran während des bestimmungsgemäßen Gebrauchs kollabieren die Membranporen irreversibel und die Membran wird unbrauchbar.

In WO 2005/113121 A1 ist außerdem die Herstellung von Kompositmembranen auf Basis von sogenannten Polymeren mit intrinsischer Mikroporosität (PIM) beschrieben. Die Kompositmembranen werden vorzugsweise auf einem porösen PAN-Träger mit Porengröße < 15 nm hergestellt.

Polymere mit intrinsischer Mikroporosität (PIM) gehören allgemein neben einigen Polyacetylenen (z.B. Polytrimethylsilylpropyne (PTMSP), Polymethylpentyne (PMP)) zu Polymeren mit einem extrem großen freien Volumen. Diese Polymere sind in wenigen organischen Losemitteln löslich, zeigen eine sehr gute Filmbildung und können leicht zu Kompositmembranen verarbeitet werden.

Die Eigenschaften von der Klasse von Polymeren mit großem freiem Volumen, so genannten mikroporösen Polymeren, wurden beispielsweise in mehreren Publikationen beschrieben:

- WO 2005/012397 A3 (entspricht US-A-2006/246273)
- Kricheldorf, et al. "Cyclic and Telechelic Ladder Polymers Derived from Tetrahydroxytetramethylspirobisindane and 1,4-dicyanotetrafluorobenzene", J. Polym. Sci. Pol. Chem. 44 (2006) 5344-5352.

Diese Polymere werden allgemein als "Polymers of Intrinsic Microporosity (PIM)" d.h. Polymere mit intrinsischer bzw. inhärenter Mikroporosität bezeichnet.

Besonders in unpolaren Lösemitteln wie den aliphatischen Lösemitteln n-Hexan, n-Heptan wird bei Kompositmembranen mit PIM als stoffselektiver Trennschicht eine sehr gute Rückhaltung bei hohem Fluss gefunden.

Ferner ist bekannt, dass PAN-Träger bzw. Trägerschichten auf der Basis von Polyacrylnitril (PAN) eine sehr gute Lösemitteistabilität gegenüber tiefsiedenden Lösemitteln unterschiedlicher Polarität haben. Die PAN-Träger versagen naturgemäß bei Anwendung von hochsiedenden Lösemitteln wie z.B. Dimethylformamid (DMF), Dimethylacetamid (DMAC), Dimethylsulfoxid (DMSO) oder N-Methylpyrrolidon (NMP), in denen sich der PAN-Träger löst oder sehr stark quillt.

Außerdem sind in DE 198 11997 C1 eine lösemittel- und säurestabile Membran auf Basis von Acrylnitril-Copolymer sowie ein Verfahren zur Herstellung dieser Membran offenbart, wobei für hochsiedende Lösemittel als Träger Poly(acrylnitril-glycidylmethacrylat) Copolymere (PANGMA) verwendet werden und die Membranen durch eine Ammoniakbehandlung vernetzt sind.

In US 5,032,278 ist weiterhin die Herstellung von Kompositmembranen aus Polyethylenimin (PEI) und eine thermische Vernetzung dieser Kompositmembranen durch einfaches Tempern bei 100 bis 200°C für 3 bis 20 Min beschrieben. Als Einsatzgebiet wird für diese Membran das Entwässern von organischen Lösemitteln wie Isopropanol, Methylethylketon oder Lösemittelgemischen vorgeschlagen. Membranen dieser Art zeigen in der organophilen Nanofiltration allerdings einen für technische Anwendungen wesentlich zu geringen Fluss und überdies keine Rückhaltung im Bereich der Nanofiltration.

In US-A 5 702 503 ist ferner eine Gastrennungskompositmembran offenbart, bei der auf einem Basisträger ein asymmetrischer poröser Träger ausgebildet ist, wobei ein erster Bereich des porösen Trägers mikroporös ist und ein zweiter Bereich kleine Poren aufweist. Auf dem asymmetrischen porösen Träger ist ein ultradünner Film von membranbildendem Polymer ausgebildet. Darüber hinaus wird auf diesem ultradünnen Film eine nicht poröse schützende Dichtungspolymerschicht ausgebildet. Der ultradünne Film des membranbifdenden Polymers besteht aus PTMSP oder Polyetherimid oder PPO oder Mischungen davon.

Darüber hinaus offenbart US-B-6 316 684 eine Membran mit einer Trennschicht aus einem Polymer, wobei das Polymer eine Glasübergangstemperatur von wenigstens über 100 'Celsius und ein anteiliges Reinvolumen von wenigstens 0,2 aufweist (vgl. Anspruch22).

In US-A-2006/249018 ist eine Polyimidmembran beschrieben, wobei die Polyimidmembran ein Polyimidhomopolymer oder-copolymer umfasst und wobei das Homopolymer oder Copolymer mit einem nucleophilen Modifizierer funktionalisiert oder vernetzt wird. Hierbei ist der nucleophlle Modifizierer ein Amin, Natriumhydroxid, Kaliumhydroxid oder Ammoniumhydroxid.

In EP-A-0 753 337 ist ein dampfdurchlässiger Modul zum Abtrennen eines ersten Dampfes aus einem Zulaufstrom offenbart, wobei ein Bündel Dünnschicht-Verbundhohlfasermembranen vorgesehen ist und jede Verbundhohlfasermembran eine hochpermeable hohle Trägerfaser und einen permselektiven Überzug auf der Oberfläche der Trägerfaser aufweist.

Ausgehend von diesem Stand der Technik besteht die Aufgabe der Erfindung darin, eine kostengünstige, insbesondere lagerungsstabile, Membran für die Nanofiltration und/oder Dampfpermeation bereitzustellen, die gegen organische Lösemittel beständig ist, wobei die Membran einen hohen Fluss und/oder eine hohe Rückhaltung ermöglichen soll.

Gelöst wird diese Aufgabe durch eine Kompositmembran zur Trennung von Stoffgemischen nach der Methode der Nanofiltration oder der Dampfpermeation, umfassend wenigstens eine Trägerschicht und wenigstens eine auf der Trägerschicht ausgebildete stoffselektive Trennschicht, die dadurch weitergebildet ist, dass die stoffselektive Trennschicht aus einer mehrkomponentigen Mischung hergestellt ist, wobei die Mischung als eine erste Komponente ein Polymer mit intrinsischer Mikroporosität PIM oder Polymere mit einem großen freien Volumen, ausgewählt aus der Gruppe bestehend aus Poly[1-(trimethylsilyl)-1-propin] und Poly-4-methylpenten enthält und als wenigstens eine zweite Komponente Polyethylenimin(e) (PEI) und/oder Poly-ethylenglykol(e) (PEG) und/oder Polypropylen-Glykol(e) (PPG) enthält, wobei die zweite Komponente reaktive Endgruppen zur Vernetzung der stoffselektiven Trennschicht aufweist und die stoffselektive Trennschicht durch eine chemische Vernetzung und/oder eine thermische Vernetzung vernetzt ist, wobei der Anteil der zweiten Komponente in der Mischung zwischen 5 Gew.-% bis 50 Gew.-% beträgt.

Die Erfindung beruht auf dem Gedanken, dass Polymere mit einem (extrem) großen freien Volumen wie z.B. Polymere mit intrinsischer Mikroporosität (PIM) und Polymere mit einem großen freien Volumen, ausgewählt aus der Gruppe bestehend aus Poly[1-(trimethylsilyl)-1-propin] und Poly-4-methylpenten durch Zumischen von Polyethylenimin (PEI), Polyethylenglykol (PEG) oder PPG homogene Mischungen bzw. Blends bilden, so dass in der stoffselektiven Trennschicht ein interpenetrierendes Netzwerk innerhalb der Trennschicht ausgebildet wird bzw. ist, so dass durch geeignete Methoden die Trennschicht z.B. chemisch oder thermisch vernetzt wird. Anhand des Mischungsverhältnisses von erster Komponente und zweiter Komponente der mehrkomponentigen Mischung für die stoffselektive Trennschicht können die Flüsse bzw. Permeabilitäten sowie Rückhaltungen von Nanofiltrationsmembranen oder Dampfpermeationsmembranen gezielt bzw. gesteuert eingestellt werden, da sich in der Mischung bzw. im homogenen Blend durch das zweite Polymer die Polarität und damit die Quellfähigkeit der stoffselektiven Trennschicht gegenüber Lösemitteln verschiedener Polarität entsprechend angepasst bzw. eingestellt wird.

Aufgrund des Mischungsverhältnisses von erster Komponente (Polymere mit extrem großem freien Volumen) und der zweiten Komponente lässt sich entsprechend die Polarität und somit auch die Quellfähigkeit entsprechend den gewünschten Anforderungen gezielt einstellen bzw. ändern.

Für die Ausbildung bzw. Herstellung der stoffselektiven Trennschicht auf der Trägerschicht der Kompositmembran wird die mehrkomponentige Polymermischung in einem Lösemittel gelöst, so dass eine Beschichtungslösung entsteht. Insbesondere beträgt die Konzentration der mehrkomponentigen Mischung bzw. Beschichtung oder Polymermischung in der Beschichtungslösung zwischen 0,05 Gew.-% bis 5 Gew.-%, insbesondere zwischen 0,1 Gew.-% bis 2,5 Gew.-%. Beispielsweise wird als Lösemittel für die Beschichtungslösung Tetrahydrofuran (THF) oder eine Mischung aus THF/Dioxan bzw. THF/Toluol oder Chloroform ($CHCl_3$) verwendet.

Darüber hinaus ist es in einer Ausgestaltung von Vorteil, wenn die zweite Komponente, wie z.B. PEI (Polyethylenimin), PEG oder PPG, reaktive Endgruppen zur Vernetzung der stoffselektiven Trennschicht aufweist, so dass die zum Verblenden verwendeten niedermolekularen Polymere für die zweite Komponente reaktive Endgruppen besitzen, die zur chemischen Vernetzung der stoffselektiven Trennschicht verwendet werden bzw. führen.

Insbesondere weisen als zweite Komponente Polyethylenimin(e) (PEI), als vorzugsweise verzweigtes Polymer, und/oder Polypropylen-Glykol(e) (PPG), als vorzugsweise lineares Polymer, als reaktive Endgruppen NH2-Gruppen und/oder Polyethylenglykol(e) (PEG), als vorzugsweise lineares Polymer, als reaktive Endgruppen OH-Gruppen auf. Diese beiden Endgruppen zeigen gegenüber Säurechloriden (-COCl) sowie Isocyanaten (-N=C=O) oder Epoxiden eine hohe Reaktivität, wobei die Aminogruppen eine höhere Reaktivität aufweisen.

Zur Vernetzung der stoffselektiven Trennschicht ist außerdem vorgesehen, dass die stoffselektive Trennschicht durch wenigstens eine bifunktionelle Verbindung mit, vorzugsweise sterisch ungehinderten oder frei zugänglichen, -COCl-Gruppen oder -N=C=O-Gruppen oder Epoxidgruppen vernetzt ist, so dass dadurch die Mischung für die stoffselektive Trennschicht bzw. die stoffselektive Trennschicht unlöslich insbesondere in organischen Lösemitteln ist. Dadurch wird eine stoffselektive Trennschicht bzw. Membranschicht auf der Trägerschicht aus Polymeren mit extrem freien Volumen für die, insbesondere organophile, Nanofiltration oder für die Dampfpermeation für alle Lösemittel stabilisiert und einsatzfähig gemacht. Insbesondere erfolgt die Vernetzung auf chemische Weise, wobei hierfür in der Regel eine verdünnte Lösung verwendet wird. Durch die Quellung der Mischung bzw. des Blends diffundiert das Vernetzungsmittel bzw. der Vernetzer zu den zur Vernetzung befähigten, funktionellen Gruppen, wodurch die Membran bzw. stoffselektive Trennschicht gleichmäßig und zur Unlöslichkeit vernetzt wird.

Darüber hinaus kann neben der chemischen Vernetzung auch eine thermische Vernetzung der stoffselektiven Trennschicht durchgeführt werden. Hierbei werden nach Aufbringen der stoffselektiven Trennschicht auf die Trägerschicht der Kompositmembran die Kompositmembranen einer entsprechenden Temperaturbehandlung unterzogen. Insbesondere wird die thermische Vernetzung bei Mischungen durchgeführt, die als zweite Komponente PEI (Polyethylenimin) enthalten. Hierzu ist ein Anteil von 5 Gew.-% bis 50 Gew.-%, insbesondere zwischen 10 Gew.-% und 30 Gew.-% an PEI in der mehrkomponentigen Mischung erforderlich, um nach einer Temperaturbehandlung von über 5 min, vorzugsweise über 10 min, bis beispielsweise 24 h, vorzugsweise bis 16 h, bei einer Temperatur von über 50°C, insbesondere über 80°C, weiter vorzugsweise über 100°C, eine auch gegenüber Lösemitteln stabile Kompositmembran zu erhalten. Daher zeichnet sich die Kompositmembran dadurch aus, dass die stoffselektive Trennschicht durch eine chemische Vernetzung und/oder eine thermische Vernetzung vernetzt ist.

Insbesondere ist die, insbesondere vernetzte, Kompositmembran lösemittelstabil, vorzugsweise in organischen Lösemitteln, um beispielsweise eine organophile Nanofiltration durchzuführen.

In einer weiteren Ausgestaltung ist vorgesehen, dass die Trägerschicht aus PAN oder PANGMA oder PVDF oder PAN/PDMS oder PAN/Teflon hergestellt ist oder diese enthält.

Darüber hinaus zeichnet sich die Kompositmembran dadurch aus, dass der Anteil der zweiten Komponente in der Mischung bzw. Polymermischung zwischen 5 Gew.-% bis 50 Gew.-%, vorzugsweise zwischen 10 Gew.-% bis 30 Gew.-%, beträgt, wobei die Mischung für die stoffselektive Trennschicht in einem entsprechenden Lösemittel gelöst wird, wodurch eine Beschichtungslösung bereitgestellt wird oder ist.

Durch eine chemische oder thermische Vernetzung der Mischungen aus Polymeren mit großem freien Volumen mit PEG, PPG oder PEI (Polyethylenimin) werden aus löslichen Polymeren mit großem freien Volumen gegen Lösemittel stabile Kompositmembranen hergestellt bzw. bereitgestellt. Die erfindungsgemäße Kompositmembran zeichnet sich durch eine hohe Permeabilität bzw. einen hohen Fluss bei gleichzeitiger hoher Rückhaltung im Nanofiltrationsbereich bzw. Dampfpermeationsbereich aus. Insbesondere sind die Kompositmembranen lagerungsstabil, so dass ein Trockenfallen der Kompositmembran beim Einsatz in einer Membrantrenneinrichtung zu keinem Verlust der Trenneigenschaften führt.

Die erfindungsgemäßen Kompositmembranen, bestehend aus mindestens zwei Polymeren, werden vorteilhafterweise mit einer einfachen und kostensparenden, technisch mit Standardmaschinen durchführbaren Methode der Vernetzung unlöslich in allen Lösemitteln und dadurch universell in der organophilen Nanofiltration oder Dampfpermeation einsetzbar. Insbesondere liegt die Selektivität der erhaltenen Blendmembranen bzw. Kompositmembranen höher als bei einstoffigen stoffselektiven Trennschichten bzw. stoffselektiven Trennschichten aus ausschließlich einem reinen Polymer.

Durch das Zumischen eines zweiten, wesentlich günstigerem und kommerziell verfügbarem Polymer ergibt sich eine entsprechende Einsparung an teuren Polymeren wie z.B. Polymere mit intrinsischer Mikroporosität bzw. Polymere mit einem großen freien Volumen ausgewählt aus der Gruppe bestehend aus (Poly[1-(trimethylsilyl)-1-propin] (PTMSP) oder Poly-4-methylpenten (PMP)).

Ferner wird die Aufgabe gelöst durch eine Verwendung einer Kompositmembran zur Trennung von Stoffgemischen nach der Methode der Nanofiltration oder der Dampfpermeation, insbesondere in einer Membrantrenneinrichtung, wobei die Kompositmembran wie voranstehend beschrieben ausgebildet ist. Zur Vermeidung von Wiederholungen wird auf die obigen Ausführungen ausdrücklich verwiesen.

Die nachfolgenden Ausführungsbeispiele für Kompositmembranen veranschaulichen die vorliegende Erfindung, ohne ihren Umfang einzuschränken.

Ausführungsbeispiele für Kompositmembranen

a. Träger für Kompositmembranen und für die Kompositmembranherstellung Als Trägerschicht bzw. Träger für die trennselektiven Trennschichten der Kompositmembranen wurden poröse PAN-Träger mit einem Glasfluss von ca. 100 m$^3$/m$^2$hbar und einer Porengröße von kleiner als 15 Nanometer (< 15 nm) verwendet.

Als weitere Träger wurden Trägerschichten bzw. Formkörper aus PAN, Poly(acrylnitril-co-glycidylmethacrylat) (PANGMA) oder Polyvinylidenfluorid (PVDF) für die Kompositmembranen verwendet.

Für weitere Kompositmembranen wurden Trägerschichten bzw. Formkörper aus PAN verwendet, die mit einer dünnen Schicht aus Polydimethylsiloxan (PDMS) überzogen bzw. ausgebildet waren (PAN/PDMS: O$_2$-Fluss bzw. Permeabilität von 02 2 bis 5 m$^3$/m$^2$hbar, Selektivität O$_2$/N$_2$ = 2) oder die mit einer Lösung aus Teflon AF® 2400 behandelt waren. Hierzu wurden die PAN-Träger in eine Lösung mit 0.005 bis 0.01% Teflon AF® getaucht, wobei keine dichte Schicht erhalten wurde.

Die Träger bzw. Trägerschichten wurden mit trennselektiven Trennschichten durch Eintauchen in (verdünnte) Polymerlösungen bzw. Beschichtungslösungen beschichtet, so dass Kompositmembranen anschließend hergestellt wurden. Die Beschichtungslösungen enthielten als Lösemittel Tetrahydrofuran (THF) oder eine Mischung aus THF/Dioxan bzw. THF/Toluol oder Chloroform (CHCl$_3$).

b. Als Komponenten für die Polymermischungen für die aktive bzw. trennselektive Trennschicht wurden folgende Polymere verwendet:

- Polymere mit intrinsischer Mikroporosität (PIM). Die PIM wurden hergestellt, wie bei Kricheldorf et al. beschrieben (H.R. Kricheldorf, N. Lomadze, D. Fritsch, G. Schwarz, "Cyclic and telechelic ladder polymers derived from tetrahydroxytetramethylspirobisindane and 1,4-dicyanotetrafluorobenzene", J. Polym. Sci. Part A: Polym. Chem. 44 (2006) 5344 - 5352) und hatten eine intrinsische Viskosität in Chloroform von 30 bis 40 cm$^3$/g.
- PTMSP [Poly(1-trimethylsilyl-1-propyne, ABCR #AB109219]
- PEG 600 [Polyethylenglycol, $M_w$ -600 g/mol, Merck # 807486]
- PPG [Poly(propylene glycol)-block-poly(ethylene glycol)-block-poly(propylene glycol)bis(2-aminopropyl ether), Jeffamine® ED-900®, $M_n$ -900 g/mol, Aldrich #406627]
- PEI [verzweigtes Polyethylenimine, $M_n$ ~10000 g/mol, Aldrich #408727]
- PEGDEG [Vernetzer: Poly(ethylene glycol) diglycidyl ether, $M_n$ -526 g/mol, Aldrich #475696]

c. Durchführung von Nanofiltration mittels der Kompositmembranen

Für die Nanofiltration wurden 100 ml Lösung in eine Millipore-Zelle in Edelstahlausführung mit Magnetrührung und lösemittelstabilem O-Ring eingefüllt. Es wurde mit N2-Gasdruck von 3 bis 6 bar gearbeitet. Nach einer Permeatabnahme von 50 ml wurden die nächsten 10 ml für die Bestimmung der Rückhaltung und des Flusses verwendet.

Zur Messung der Rückhaltung wurde als Marker Hexaphenylbenzene (HPB, Molmasse= 535 g/mol) in einer Konzentration von 8 mg/l verwendet. Die Konzentration in Feed, Retentat und Permeat wurde durch Gelpermeationschromatographie mit Tetrahydrofuran als Laufmittel unter Verwendung eines UV-Detektors gemessen.

Die Rückhaltung von HPB wurde nach der folgenden Gleichung bestimmt

$$R_i = (1 - C_{Pi}/C_{Ri}) \times 100\ \%,$$

wobei $C_{Pi}$ die Konzentration im Permeat und $C_{Ri}$ die Konzentration im Retentat bedeuten.

Beispiel 1 Rückhaltung von HPB der Molmasse 535 g/mol in n-Heptan mit verschiedenen Kompositmembranen

Aus Tabelle 1 ist ersichtlich, dass PIM im Lösemittel n-Heptan schon eine sehr gute Rückhaltung von ca. 90% für HPB bei Flüssen von 3 bis 7 l/m$^2$hbar erreicht (vgl. Nr 1-11 bis 1-16). Auf einem Teflon AF® behandelten PAN-Träger verringert sich die Rückhaltung auf 72 bis 75% bei stark ansteigenden Flüssen von 15 bis 18 l/m-hbar (Nr. 1-17 und 1-18). Desgleichen auf einem PAN/PDMS-Träger, wo der Fluss sehr stark ansteigt (Nr. 1-2).

Tabelle 1

| Membran Nr. | Träger | Beschichtung | Behandlung | Konzentration der Beschichtung in der Beschichtungslösung / % | Lösemittel für Beschichtungslösung[1] | Heplanfluss / l/m²hbar | Rückhaltung NPB / % |
|---|---|---|---|---|---|---|---|
| 1-1 | PAN/PDMS | PIM/PEI (8/2) | 120°C/16h | 0.3 | THF/Dioxan | 2.4 | 97 |
| 1-2 | PAN/PDMS | PIM | | 0.2 | THF/Toluot | 36.0 | 57 |
| 1-3 | PAN | PIM/PEI (8/2) | PEGDEG | 0.5 | THF | 1.1 | 97 |
| 1-5 | PAN | PIM/PEI (8/2) | | 1.0 | THF | 3.2 | 90 |
| 1-6 | PAN | PIM/PEI (8/2) | | 0.5 | THF | 5.3 | 90 |
| 1-7 | PAN | PIMIPEI (8/2) | 120°C/16h | 0.5 | THF | 0.2 | - |
| 1-8 | PAN | PIM/PEI (96/04) | | 1.0 | THF/Dioxan | 6.4 | 83 |
| 1-9 | PAN | PIM/PPG (8/2) | | 1.0 | THF/Dioxan | 10.0 | 75 |
| 1-10 | PAN | PTMSP/PEI (8/2) | 120°C/16h | 1.0 | $CHCl_3$ | 5.2 | 70 |
| 1-11 | PAN | PIM | | 1.0 | THF | 7.0 | 92 |
| 1-12 | PAN | PIM | | 1.0 | THF | 5.5 | 90 |
| 1-13 | PAN | PIM | | 1.0 | THF | 5.1 | 90 |
| 1-14 | PAN | PIM | | 1.0 | $CHCl_3$ | 4.9 | 89 |
| 1-15 | PAN | PIM | | 1.0 | THF | 5.4 | 88 |
| 1-16 | PAN | PIM | | 1.0 | $CHCl_3$ | 3.2 | 87 |
| 1-17 | PAN/Teflon AF 0.01% | PIM | | 0.5 | THF | 15.1 | 75 |
| 1-18 | PAN/Teflon AF 0.005% | PIM | | 0.5 | THF | 18.2 | 72 |

[1]Bei Angabe von zwei Lösemitteln wurde in dem erstgenannten Lösemittel gelöst, das zweite bis zur Trübung zugegeben und mit einem Gemisch dieser Zusammensetzung auf die angegebene Konzentration verdünnt.

Durch Zusatz von 20% PEI kann die Rückhaltung bis 97% gesteigert werden, wenn mit PEGDEG in methanolischer Lösung chemisch vernetzt wird (Nr. 1-3). Das thermische Vernetzen durch eine thermische Behandlung bei 120°C für 16 Stunden führt zu einem starken Rückgang des Flusses auf 0.2 l/m$^2$hbar (Nr. 1-7).

PPG als 20% Zusatz zur Kompositmembran erhöht den Fluss bei geringerer Rückhaltung (Nr. 1-9). Wird eine PIM/PEI-Kompositmembran auf einem PAN/PDMS-Träger hergestellt, so werden hohe Flüsse bei exzellenter Rückhaltung von 97% erhalten (Nr. 1-1).

PTMSP kann nur bei Vernetzung für aliphatische Kohlenwasserstoffe eingesetzt werden. Ein thermisch vernetzter 20% Blend (Nr. 1-10) zeigt nur eine Rückhaltung von 70% bei einem mittleren Fluss von 5 l/m$^2$hbar.

Beispiel 2 Rückhaltung von HPB der Molmasse 535 g/mol in Chloroform und Tetrahydrofuran (THF)

Die Rückhaltung von HPB der Molmasse 535 g/mol in Chloroform und THF mit verschiedenen Kompositmembranen wurde gemessen. Als Membranen wurden Kompositmembranen mit PAN-Träger und Beschichtungen aus PIM/PEI (8/2 bzw. 80% PIM / 20 % PEI) als stoffselektive bzw. trennaktive Trennschichten verwendet. Die Kompositmembranen wurden thermisch durch eine thermische Behandlung bei 120°C für eine Zeitdauer von 16 Stunden vernetzt oder chemisch vernetzt.

Die Ergebnisse sind in Tabelle 2 zusammengefasst wiedergegeben.

Tabelle 2

| Membran Nr. | Konzentration der Beschichtung in der Beschichtungslösung/ % | Lösemittel für Beschichtungslösung[1] | $CHCl_3$-Fluss /l/m²hbar | Rückhaltung $CHCl_3$-HPB/% | THF-Fluss l/m²hbar | Rückhaltung THF-HPB /% |
|---|---|---|---|---|---|---|
| 2-1 | 1.0 | THF | 3.7 | 92 | 5.7 | 82 |
| 2-2 | 1.0 | THF/Dioxan | 3.5 | 91 | 2.0 | 95 |
| 2-3 | 0.5 | THF | 5.0 | 81 | | |
| 2-4[2] | 1.0 | THF | 5.9 | 80 | 5.9 | 76 |
| 2-5[3] | 1.0 | $CHCl_3$ | 6.7 | 76 | 5.7 | 86 |
| 2-6[4] | 0.5 | THF | 0.3 | 0 | 0.1 | 0 |

[1]Bei Angabe von zwei Lösemitteln wurde in dem erstgenannten Lösemittel gelöst, das zweite bis zur Trübung zugegeben und mit einem Gemisch dieser Zusammensetzung auf die angegebene Konzentration verdünnt

[2]chemisch vernetzt mit PEGDEG bei Raumtemperatur

[3]PTMSP/PEI (8/2 d.h. 80% PTMS / 20% PEI)

[4]reine PEI

Durch die thermische Vernetzung werden stabile Kompositmembranen erhalten, die in beiden Lösemitteln 80 bis 95% Rückhaltung von HPB bei Permeabilitäten bzw. Flüssen 3 bis 6 l/m$^2$hbar erreichen (Nr. 2-5).

Die Rückhaltung liegt für den PTMSP-Blend (Nr. 2-5) für THF im Vergleich zu CHCl$_3$ um 10% höher bei vergleichbarem Fluss. Der PIM /PEI-Blend erreicht in THF und CHCl$_3$ Rückhaltungen von über 90% bei sehr guten Flüssen.

Reines PEI zeigt nach der Vernetzung nur sehr geringe Flüsse und keine Rückhaltung (Nr. 2-6). Die chemische Vernetzung der Blends mit PEGDEG (Nr. 2-4) bringt nur geringere Rückhaltung von 76% (THF) und 80% (CHCl$_3$) bei höheren Flüssen wie die thermische Vernetzung (Nr. 2-1).

Beispiel 3 Rückhaltung von HPB der Molmasse 535 g/mol in Toluol und Aceton mit verschiedenen Membranen

Bei den durchgeführten Nanofiltrationen wurde die Rückhaltung von HPB der Molmasse 535 g/mol in Toluol und Aceton mit verschiedenen Membranen gemessen. Als Membranen wurden Kompositmembranen mit PAN-Träger und Beschichtungen aus PIM/PEI (8/2 bzw. 80% PIM / 20 % PEI) verwendet. Die Kompositmembranen wurden thermisch vernetzt durch eine thermische Behandlung bei 120°C für eine Zeitdauer von 16 Stunden oder chemisch vernetzt. Die Ergebnisse sind in Tabelle 3 zusammengefasst.

**Tabelle 3**

| Nr. | Konzentration der Beschichtung in der Beschichtungslösung / % | Lösemittel für Beschichtungslösung[1] | Toluolfluss / $l/m^2hbar$ | RückhaltungToluol-HPB/ % | Acetonfluss /$l/m^2hbar$ | RückhaftungAceton-HPB /% |
|---|---|---|---|---|---|---|
| 3-1 | 1.0 | THF/Dioxan | 1.2 | 95 | 1.3 | 73 |
| 3-2 | 1.0 | THF | 1.3 | 95 | 2.8 | 94 |
| 3-3 | 0.5 | THF | 0.8 | 93 | 4.7 | 88 |
| 3-4[2] | 1.0 | $CHCl_3$ | 4.7 | 80 | 2.8 | 89 |
| 3-5[3] | 1.0 | THF | 3.0 | 81 | 2.8 | 91 |
| 3-6[3] | 0.5 | THF | 10.0 | 70 | 12.0 | 79 |
| 3-7[4] | 1.0 | THF | 0.2 | 78 | 0.4 | 84 |
| 3-8[5] | 1.0 | THF | 13.0 | 52 | 11.0 | 77 |
| 3-9[5] | 1.0 | $CHCl_3$/THF | 9.0 | 72 | 14.0 | 55 |

[1]Bei Angabe von zwei Lösemitteln wurde in dem erstgenannten Lösemitteln gelöst, das zweite bis zur Trübung zugegeben und mit einem Gemisch dieser Zusammensetzung auf die angegebene Konzentration verdünnt.

[2]PTMSP/PEI

[3](chemisch) vernetzt mit PEGDEG

[4]nach thermischer Vernetzung chemisch mit PEGDEG vernetzt

[5]reine, unvernetzte PIM

Ohne die Zugabe von PEI sowie ohne Vernetzung werden nur geringe Rückhaltungen bei sehr hohen Flüssen gefunden (Nr. 3-8 sowie 3-9).

Nach thermischer Vernetzung liegt der Rückhalt für HPB bei 90 bis 95% (Nr. 3-1 bis 3-3). Vernetztes PTMSP zeigt in Toluol geringeren Rückhalt (80%, Nr.3-4). Auch die Vernetzung mit PEGDEG führt zu stärkerer Quellung und damit geringerer Rückhaltung (Nr. 3-5 und 3-6).

Eine nachträgliche chemische Vernetzung von thermisch vernetztem PIM/PEI ergibt sehr kleine Flüsse bei mäßiger Rückhaltung für Toluol und Aceton (Nr. 3-7).

Beispiel 4 Rückhaltung von HPB der Molmasse 535 g/mol in Ethanol und Methanol mit verschiedenen Membranen

Es wurden verschiedene Kompositmembranen mit PAN-Träger und Beschichtungen aus PIM/PEI (8/2 bzw. 80% PIM / 20 % PEI) hergestellt, die chemisch bzw. thermisch vernetzt wurden. Anschließend wurde die Rückhaltung von HPB der Molmasse 535 g/mol in Ethanol und Methanol gemessen. Die Ergebnisse sind in Tabelle 4 zusammengefasst.

Aus Tabelle 4 ist ersichtlich, dass reine PIM Membranen ohne den Zusatz von PEI (Nr. 4-8 bis 4-10) mittelmäßige Flüsse bei schlechter Rückhaltung zeigen. Dies verbessert sich auch nicht durch die Zumischung von 20% PEI (Nr. 4-4 und 4-5).

| Membran Nr. | Vernetzung[1] | Konzentration der Beschichtung in der Beschichtungslösung /% | Lösemittel für Beschichtungslösung | Ethanolfluss / l/m²hbar | Rückhaltung Ethanol-HPB / % | Methenolfluss / l/m²hbar | Rückhaltung Methanol-HPB / % |
|---|---|---|---|---|---|---|---|
| 4-1 | PEGDEG | 1.0 | THF | 0.4 | 97 | 0.6 | 93 |
| 4-2 | PEGDEG | 0.5 | THF | 1.4 | 85 | 3.6 | 91 |
| 4-3 | methyliert | 0.5 | THF | 1.7 | 90 | 5.4 | 83 |
| 4-4 | keine | 1.0 | THF | 2.5 | 77 | 5.1 | 72 |
| 4-5 | keine | 0.5 | THF | 5.1 | 77 | 12.0 | 53 |
| 4-6 | thermisch | 1.0 | THF | 0.2 | 72 | 0.6 | 98 |
| 4-7 | thermisch | 0.5 | THF | 0.5 | 51 | 1.2 | 95 |
| 4-8 | ohne PEI | 1.0 | THF | 2.8 | 79 | 6.6 | 74 |
| 4-9 | ohne PEI | 1.0 | THF | 3.2 | 77 | 0.9 | 85 |
| 4-10 | ohne PEI | 0.6 | THF | 3.9 | 64 | <0.5 | 45 |
| 4-11[2] | thermisch | 1.0 | CHCl$_3$ | | | 0.77 | 60 |

[1]PEGDEG: chemisch vernezt in Lösung" methyliert: Mit einem Überschuss an Methyljod und Pentamethylpyridin als Base in Methanol methyliert.
[2]PTMSP/PEI.

Die thermische Vernetzung ergibt nur einen deutlichen Rückgang der Flüsse für Ethanol; für Methanol jedoch eine sehr gute Rückhaltung bei akzeptablen Flüssen (Nr. 4-6 und 4-7).

Durch die chemische Vernetzung mit PEGDEG werden aus 0.5% Lösung gute Flüsse bei sehr guter Rückhaltung gefunden (Nr. 4-2). Durch Permethylierung des unvernetzten Blends ergeben sich ebenfalls gute Flüsse bei guter Rückhaltung (Nr. 4-3).

Beispiel 5 Kompositmembranen auf andere Trägermembranen

Auf in allen organischen Lösemitteln stabilem PANGMA Träger werden für reine PIM Kompositmembranen (1 % aus THF) für n-Heptan Rückhaltungen von 90 bis 92% erreicht bei Flüssen von 1-2.5 l/m$^2$hbar. Für DMSO ergab sich ein Fluss von 0.42 l/m$^2$hbar.

Auf PVDF-Trägern ist die Haftung von PIM schlechter mit der Folge, dass die Rückhaltung wesentlich niedriger liegt. So wird bei einer Beschichtung von PIM aus 1 % THF-Lösung nur eine Rückhaltung von 45 bis 52% bei Flüssen von 7 bis 17 l/m$^2$hbar im Lösemittel n-Heptan gefunden.

Weitere Untersuchungen

In weiteren Untersuchungen der Kompositmembranen wurde durch dynamische Differenzkalorimetrie (DSC) festgestellt, dass die Glastemperaturen bzw. auch der Schmelzpeak im Blend von PIM oder PTMSP mit PEI, PPG und PEG nicht mehr nachgewiesen werden konnten. Dies ist somit ein Beleg für einen homogenen Blend mit der Ausbildung eines interpenetrierenden Netzwerkes der beiden Polymere.

Alle genannten Merkmale, die auch in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

**Patentansprüche**

1. Kompositmembran zur Trennung von Stoffgemischen nach der Methode der Nanofiltration oder Dampfpermeation, umfassend wenigstens eine Trägerschicht und wenigstens eine auf der Trägerschicht ausgebildete stoffselektive Trennschicht, **dadurch gekennzeichnet, dass** die stoffselektive Trennschicht aus einer mehrkomponentigen Mischung hergestellt ist, wobei die Mischung als eine erste Komponente ein Polymer mit intrinsischer Mikroporosität (PIM) oder Polymere mit einem großen freien Volumen, ausgewählt aus der Gruppe bestehend aus Poly[1-(trimethylsilyl)-1-propin] und Poly-4-methylpenten enthält und als wenigstens eine zweite Komponente Polyethylenimin(e) (PEI) und/oder Polyethylenglykole(e) (PEG) und/oder Poly-PropylenGlykol(e) (PPG) enthält, wobei die zweite Komponente reaktive Endgruppen zur Vernetzung der stoffselektiven Trennschicht aufweist und die stoffselektive Trennschicht durch eine chemische Vernetzung und/oder ein thermische Vernetzung vernetzt ist, wobei der Anteil der zweiten Komponente in der Mischung zwischen 5 Gew.-% bis 50 Gew.% beträgt.

2. Kompositmembran nach Anspruch 1, **dadurch gekennzeichnet, dass** die Mischung als zweite Komponente Polyethylenimin(e) (PEI), als vorzugsweise verzweigtes Polymer, und/oder Poly-Propylen-Glykol(e) (PPG), als vorzugsweise lineares Polymer, als reaktive Endgruppen NH$_2$-Gruppen und/oder Polyethylenglykol(e) (PEG), als vorzugsweise lineares Polymer, als reaktive Endgruppen OH-Gruppen aufweist.

3. Kompositmembran nach Anspruch 1 oder 2, **dadurch gekennzeichnet, dass** die stoffselektive Trennschicht durch wenigstens eine bifunktionelle Verbindung mit, vorzugsweise sterisch ungehindert oder frei zugänglichen, -COCl-Gruppen oder -N=C=O-Gruppen oder Epoxid-Gruppen vernetzt ist.

4. Kompositmembran nach einem der Ansprüche 1 bis 3, **dadurch gekennzeichnet, dass** die vernetzte, Kompositmembran lösemittelstabil ist.

5. Kompositmembran nach einem der Ansprüche 1 bis 4, **dadurch gekennzeichnet, dass** die Trägerschicht aus Polyacrylnitril (PAN) oder Poly(acrylnitril-co-glycidylmethacrylat) (PANGMA) oder Polyvinylidenfluorid (PVDF) hergestellt ist oder diese enthält.

6. Kompositmembran nach einem der Ansprüche 1 bis 5, **dadurch gekennzeichnet, dass** der Anteil der zweiten Komponente in der Mischung zwischen 10 Gew.-% bis 30 Gew.-% beträgt.

7. Verwendung einer Kompositmembran zur Trennung von Stoffgemischen nach der Methode der Nanofiltration oder der Dampfpermeation, insbesondere in einer Membrantrenneinrichtung, wobei die Kompositmembran nach einem der Ansprüche 1 bis 6 ausgebildet ist.

**Claims**

1. Composite membrane for separation of material mixtures according to the method of nanofiltration or vapour permeation, comprising at least one carrier layer and at least one material-selective separation layer formed on the carrier layer, **characterised in that** the material-selective separation layer is produced from a multicomponent mixture, the mixture comprising, as a first component, a polymer with intrinsic microporosity (PIM) or polymers with a large free volume, selected from the group consisting of poly[1-(trimethylsilyl)-1-propyne] and poly-4-methylpentene and comprising, as at least one second component, polyethylene imine(s) (PEI) and/or polyethylene glycol(s) (PEG) and/or polypropylene glycol(s) (PPG), the second component having reactive end groups for crosslinking the material-selective separation layer, and the material-selective separation layer being crosslinked by chemical crosslinking and/or thermal crosslinking, the proportion of the second component in the mixture being between 5% by weight to 50% by weight.

2. Composite membrane according to claim 1, **characterised in that** the mixture has as second component polyethylene imine(s) (PEI), as preferably branched polymer, and/or polypropylene glycol(s) (PPG), as preferably linear polymer, as reactive end groups $NH_2$ groups and/or polyethylene glycol(s) (PEG), as preferably linear polymer, as reactive end groups OH-groups.

3. Composite membrane according to claim 1 or 2, **characterised in that** the material-selective separation layer is crosslinked by at least one bifunctional compound with, preferably sterically unhindered or easily accessible, -COCl groups or -N=C=O groups or epoxide groups.

4. Composite membrane according to one of the claims 1 to 3, **characterised in that** the crosslinked composite membrane is stable relative to solvents.

5. Composite membrane according to one of the claims 1 to 4, **characterised in that** the carrier layer is produced from polyacrylonitrile (PAN) or poly(acrylonitrile-co-glycidyl methacrylate) (PANGMA) or polyvinylidene fluoride (PVDF) or comprises these.

6. Composite membrane according to one of the claims 1 to 5, **characterised in that** the proportion of the second component in the mixture is between 10% by weight to 30% by weight.

7. Use of a composite membrane for separation of material mixtures according to the method of nanofiltration or vapour permeation, in particular in a membrane-separating device, the composite membrane being configured according to one of the claims 1 to 6.

**Revendications**

1. Membrane composite pour séparer des mélanges de substances par la méthode de la nanofiltration ou de la perméation de vapeur, comprenant au moins une couche support et au moins une couche de séparation sélective de substance, formée sur la couche support, **caractérisée en ce que** la couche de séparation sélective de substance est fabriquée à partir d'un mélange multicomposants, le mélange contenant en tant que premier composant un polymère ayant une microporosité intrinsèque (PIM) ou des polymères ayant un grand volume libre, choisis dans le groupe consistant en la poly[1-(triméthylsilyl)-1-propyne] et le poly-4-méthylpentène, et contenant en tant qu'au moins un deuxième composant une ou plusieurs polyéthylène-imines (PEI) et/ou un ou plusieurs polyéthylèneglycol(s) (PEG) et/ou poly-propylèneglycol(s) (PPG), le deuxième composant comprenant des groupes terminaux réactifs pour réticulation de la couche de séparation sélective de substance, et la couche de séparation sélective de substance étant réticulée par une réticulation chimique et/ou une réticulation thermique, la proportion du deuxième composant dans le mélange étant comprise entre 5 % en poids et 50 % en poids.

2. Membrane composite selon la revendication 1, **caractérisée en ce que** le mélange comprend en tant que deuxième composant une ou plusieurs polyéthylène-imine(s) (PEI) en tant que polymère de préférence ramifié, et/ou un ou plusieurs polypropylèneglycol(s) (PPG) en tant que polymères de préférence linéaires, en tant que groupes terminaux réactifs des groupes NH$_2$ et/ou un ou plusieurs polyéthylèneglycol(s) (PEG) en tant que polymères de préférence linéaires, en tant que groupes terminaux réactifs des groupes OH.

3. Membrane composite selon la revendication 1 ou 2, **caractérisée en ce que** la couche de séparation sélective de substance est réticulée par au moins un composé bifonctionnel, comportant des groupes -COCI ou des groupes -N=C=O ou des groupes époxydes de préférence à empêchement stérique ou librement accessibles.

4. Membrane composite selon l'une des revendications 1 à 3, **caractérisée en ce que** la membrane composite réticulée est stable vis-à-vis des solvants.

5. Membrane composite selon l'une des revendications 1 à 4, **caractérisée en ce que** la couche support est fabriquée à partir de polyacrylonitrile (PAN) ou de poly(acrylonitrile-co-méthacrylate de glycidyle) (PANGMA) ou de poly(fluorure de vinylidène) (PVDF), ou les contient.

6. Membrane composite selon l'une des revendications 1 à 5, **caractérisée en ce que** la proportion du deuxième composant dans le mélange est comprise entre 10 % en poids et 30 % en poids.

7. Utilisation d'une membrane composite pour séparer des mélanges de substances par la méthode de la nanofiltration ou de la perméation de vapeur, en particulier dans un dispositif de séparation sur membrane, la membrane composite étant configurée selon l'une des revendications 1 à 6.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0006293 A1
- US 2006246273 A
- DE 19811997 C1
- US 5032278 A
- US 5702503 A
- US 2006249018 A
- EP 0753337 A